Europäisches Patentamt

European Patent Office

Office européen des brevets

(19)

(11) **EP 0 797 185 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.$^7$: **G10L 15/06**

(21) Anmeldenummer: **97104072.0**

(22) Anmeldetag: **11.03.1997**

(54) **Verfahren und Vorrichtung zur Spracherkennung**

Method and device for speech recognition

Procédé et dispositif pour la reconnaissance de la parole

(84) Benannte Vertragsstaaten:
**DE FR GB IT**

(30) Priorität: **19.03.1996 DE 19610848**

(43) Veröffentlichungstag der Anmeldung:
**24.09.1997 Patentblatt 1997/39**

(73) Patentinhaber: **SIEMENS AKTIENGESELLSCHAFT**
**80333 München (DE)**

(72) Erfinder: **de Vos, Luc, Dr.**
**81541 München (DE)**

(56) Entgegenhaltungen:
**EP-A- 0 146 434     US-A- 5 457 770**
**US-A- 5 528 728**

**Beschreibung**

Die Erfindung betrifft das Gebiet der Spracherkennung.

In dem Gebiet der Spracherkennung sind bisher zwei prinzipiell unterschiedliche Lösungsansätze zur Erkennung gesprochener Sprache bekannt.

Ein erstes Prinzip basiert auf der sprecherunabhängigen Spracherkennung. Hierbei wird ein ausschließlich aus fabrikatorisch festgelegten Einzelworten bestehender Wortschatz bei der Spracherkennung verwendet. Eine Rechnereinheit zur Spracherkennung, die auf diesem Prinzip basiert, sowie das entsprechende Verfahren zur sprecherunabhängigen Spracherkennung ist aus [1] bekannt. Dieser Lösungsansatz basiert beispielsweise auf einer Phonemerkennung, kombiniert mit einer Hidden-Markov-Modellierung. Aus einem von einem Benutzer eingesprochen, digitalisierten Sprachsignal werden zunächst Merkmalsvektoren abgeleitet, die die für die Spracherkennung wichtige Information des Sprachsignals beinhalten. Die ermittelten Merkmalsvektoren werden anschließend mit für die Phonemsegmente typischen Prototyp-Merkmalsvektoren verglichen, welche beispielsweise in einem dazu vorgesehenen ROM-Speicher (Read-Only-Memory) gespeichert sind.

Da für jedes Wort des zu erkennenden Wortschatzes nur Speicherplatz für die phonetische Darstellung dieses Wort vorgesehen werden muß, wird der Gesamtspeicherbedarf für die sprecherunabhängige Spracherkennung hauptsächlich von der Speicherkapazität des ROM-Speichers bestimmt. Die Ergebnisse der vorgenannten Vergleichsoperationen werden dann in einer Suche miteinander kombiniert, um das mit höchster Wahrscheinlichkeit gesprochene Wort aus dem vorgegebenen Wortschatz festzustellen. Bei diesem Lösungsprinzip muß der Wortschatz mit dem Prototyp-Merkmalsvektoren in Form von Phonemen der jeweiligen Sprache gespeichert sein. Wegen der auf einer Phonemerkennung basierenden Eigenschaft der sprecherunabhängigen Spracherkennung kann die Erkennung eines benutzerdefinierten Wortschatzteils nur unter der Voraussetzung der Verfügbarkeit einer vom Benutzer eingegebenen phonetischen Schreibweise jedes in den Wortschatz aufzunehmenden Wortes realisiert werden.

Aus diesem Grund birgt dieses Lösungsprinzip den Nachteil in sich, daß ein zusätzlicher Aufwand für den Benutzer in der phonetischen Darstellung jedes benutzerdefinierten Wortschatzteils gegeben ist, was weiterhin zu ergonomischen Nachteilen dieses Lösungsprinzips führt.

Ferner sind die erheblichen Kosten einer zusätzlich notwendigen Mensch-Maschine-Schnittstelle in Form einer Tastatur als erheblicher Nachteil bei diesem Lösungsansatz zu sehen. Durch die Notwendigkeit, daß der Benutzer selbst die Aufteilung des jeweiligen neuen Wortes in Phoneme durchführen muß, ist dieser Lösungsansatz weiterhin sehr fehleranfällig.

Ein zweites Lösungsprinzip basiert auf der sprecherabhängigen Spracherkennung. Dieser Lösungsansatz basiert auf einem Ganzwortvergleich zwischen einem eingesprochenen, digitalisierten Sprachsignal und während einer Trainingsphase eingesprochenen und zur sprecherabhängigen Spracherkennung abgespeicherten Sprechproben (Templates). Ein Mittel zur Durchführung der sprecherabhängigen Spracherkennung sowie ein Beispiel für dieses Lösungsprinzip ist aus dem Dokument [2] bekannt.

Ein erheblicher Nachteil dieses Lösungsprinzips ist in der Notwendigkeit der statischen Speicherung der abgespeicherten Sprechproben (Templates) zu sehen. Diese ist notwendig, da eine immer zu wiederholende Trainingsphase bei Beginn jeder "Spracherkennungssitzung" für einen Benutzer unzumutbar ist.

Der hierdurch bedingte Bedarf an statischem RAM-Speicherplatz ist proportional zur Anzahl der abgespeicherten Templates pro Wortschatzwort, zur Anzahl der benutzerdefinierten Wortschatzwörter und zu der Anzahl der Benutzer, für welche die sprecherabhängige Spracherkennung gleichzeitig betreibbar sein muß. Ab einer bestimmten Wertekombination für die vorgenannten Parameter wird somit nicht nur die Speicherkapazität des statischen Speichers größer als bei einer Einrichtung mit sprecherunabhängiger Spracherkennung, sondern es wird zusätzlich durch die statische Speicherung ein für einen stromsparenden Betrieb hinderlicher Anstieg der Verlustleistung festgestellt.

Ein weiterer Nachteil dieses Lösungsansatzes ist in den erheblichen Herstellungskosten zu sehen, die insbesondere aufgrund des ungünstigen Flächenverhältnisses eines statischen RAM-Speichers zu einem ROM-Speicher entstehen.

Ferner ist es aus dem Dokument [3] bekannt, die Algorithmen zur sprecherunabhängigen Spracherkennung und zur sprecherabhängigen Spracherkennung auf mehreren Chips zu implementieren. Diese bekannte Rechnereinheit weist einen Spezialprozessor mit der Typbezeichnung DVC 306, einen Mikrocontroller und mehrere Speicherchips mit insgesamt bis zum 16 Megabit S-RAM-Kapazität auf.

Diese bekannte Rechnereinheit zur Spracherkennung weist mehrere erhebliche Nachteile auf. Durch die Verwendung sowohl der Algorithmen zur sprecherunabhängigen Spracherkennung als auch der Algorithmen zur sprecherabhängigen Spracherkennung sind mehrere Algorithmen in einem ROM-Speicher zu implementieren.

Ferner sind die Nachteile der sprecherabhängigen Algorithmen, beispielsweise der hohe Bedarf an statischem RAM-Speicher und die damit verbundenen erheblichen Kosten zur Herstellung auch in dieser Implementierung noch immer vorhanden.

Ferner ist ein sogenannter Viterbi-Algorithmus aus dem Dokument [1] bekannt.

Aus dem Dokument [1] ist ebenso das sogenannte Verfahren der Dynamischen Programmierung (DP-Algorithmus) bekannt.

Somit liegt der Erfindung das Problem zugrunde, eine Rechnereinheit zur Spracherkennung zu schaffen, die die oben genannten Nachteile vermeidet. Weiterhin liegt der Erfindung das Problem zugrunde, ein Verfahren anzugeben, durch das eine Spracherkennung möglich ist, mit dem die oben genannten Nachteile bekannter Verfahren vermieden werden.

Die Probleme werden durch die Rechnereinheit gemäß Patentanspruch 11 sowie durch das Verfahren zur rechnergestützten Abbildung eines digitalen Sprachsignals auf Phoneme gemäß Patentanspruch 1 gelöst.

Ferner wird der erhebliche Nachteil des sehr hohen RAM-Speicherbedarfs bei sprecherabhängigen Lösungsansätzen vermieden, da vom Benutzer neu eingesprochene Worte abgebildet werden auf schon gespeicherte Phoneme, und die Repräsentation des neuen Wortes in Form von bekannten Phonemen abgespeichert wird. Diese erhebliche Reduktion an RAM-Speicherplatzbedarf führt ferner zu einer erheblichen Kostenreduktion bei der Herstellung der Rechnereinheit. Auch eine wesentliche Verringerung benötigter Verlustleistung bei der Durchführung der Spracherkennung wird durch die erfindungsgemäße Rechnereinheit ermöglicht.

Bei dem erfindungsgemäßen Verfahren gemäß Patentanspruch 1 wird ein von einem Benutzer neu eingesprochenes Wort in Form eines digitalisierten Sprachsignals in eine beliebige Anzahl von Sprachsignalteilen aufgeteilt. Dann wird für eine vorgebbare Anzahl von Sprachsignalteilen jeweils ein Merkmalsvektor ermittelt, der dann mit den gespeicherten Phonem-Merkmalsvektoren verglichen wird. Aus dem Vergleich wird jeweils ein Ähnlichkeitswert bestimmt, der die Ähnlichkeit des Sprachsignalteils mit dem jeweils verglichenen Phonem-Merkmalsvektor angibt. Die Ähnlichkeitswerte werden jeweils gespeichert und anhand der Ähnlichkeitswerte wird in einem letzten Schritt eine Folge von Phonemen für das digitalisierte Sprachsignal ermittelt. Durch diese Folge wird nunmehr das digitalisierte Sprachsignal beschrieben und kann in einer Phonem-Darstellung als neues Wort des Wortschatzes abgespeichert werden.

Durch diese Vorgehensweise wird es möglich, unter reduziertem Speicherplatzbedarf einen sprecherunabhängigen Algorithmus auf neue, eigentlich sprecherabhängige Worte anzuwenden. Die Vorteile des erfindungsgemäßen Verfahrens sind v. a. in den Vorteilen der dadurch möglichen Realisierung der kostengünstigen Rechnereinheit zu sehen.

Ferner ist es durch das erfindungsgemäße Verfahren möglich, auch Begriffe aus einer Fremdsprache mit Phonemen, die in dem Phonemsatzspeicher noch nicht abgespeichert sind, trotzdem mit einer sehr guten Erkennungsrate zu verarbeiten.

Vorteilhafte Weiterbildungen der Erfindung ergeben sich aus den abhängigen Ansprüchen.

Durch die Weiterbildung des Verfahrens gemäß Patentanspruch 2 werden die Ergebnisse einer im Anschluß an das erfindungsgemäße Verfahren vorgesehenen Spracherkennung weiter verbessert, da zur Vergleichsbildung der Merkmalsvektoren nicht nur gespeicherte Phonem-Merkmalsvektoren, sondern auch schon von dem Benutzer zuvor eingesprochene Sprach-Merkmalsvektoren berücksichtigt werden.

Durch die Weiterbildung des Verfahrens gemäß Patentanspruch 6 wird eine sehr einfache und doch genaue Ermittlung der Folge von Phonemen für das digitalisierte Sprachsignal erreicht. Damit wird die Durchführung des erfindungsgemäßen Verfahrens sehr schnell für die Rechnereinheit durchführbar.

Durch die Weiterbildung des Verfahrens gemäß Patentanspruch 7 wird es durch die Berücksichtigung der Länge einer zusammenhängenden Folge eines Phonems in der Folge von Ähnlichkeitswerten erreicht, daß Zufallstreffer bei der Spracherkennung, die durch zu kurze Folgen von Ähnlichkeitswerten verursacht werden bzw. aufgrund zu langer Folgen von Ähnlichkeitswerten nicht erkannte Plosivlaute vermieden werden.

Durch die Weiterbildung des Verfahrens gemäß Patentanspruch 9 wird der benötigte Rechenzeitbedarf weiter reduziert, da durch Detektierung des Wortanfangs bzw. des Wortendes unnötiges Rauschen bei der Durchführung des Verfahrens nicht in Form von Sprachsignalteilen berücksichtigt wird. Dadurch wird die Zahl benötigter Sprachsignalteile und somit auch die Zahl benötigter Vergleiche reduziert. Ferner wird die Fehleranfälligkeit des erfindungsgemäßen Verfahrens erheblich vermindert.

Eine weitere Reduktion der Fehleranfälligkeit des erfindungsgemäßen Verfahrens wird durch die Weiterbildung des Verfahrens gemäß Patentanspruch 11 erreicht, bei dem die digitalen Sprachsignalteile sich jeweils überlappen können. Durch die daraus entstehende Redundanz der Information des Sprachsignals wird das Ergebnis des Verfahrens weiter "abgesichert".

Ferner ist es eine vorteilhafte Eigenschaft des erfindungsgemäßen Verfahrens, daß durch die Gewinnung von Ähnlichkeitswerten eine implizite Bewertung des Abstandes des digitalisierten Sprachsignals im Merkmalsraum von einem schon gespeicherten Wort im Merkmalsraum bestimmt werden kann, wodurch es ermöglicht wird, daß die Speicherung von Worten, deren Phonemrepräsentation in dem Merkmalsraum zu nah an schon gespeicherten Worten liegen, nicht gestattet wird, um damit eine steigende Fehleranfälligkeit bei der Spracherkennung durch in dem Merkmalsraum zu nah aneinanderliegende Worte zu vermeiden.

Durch die Verwendung nur einer Art von Bewertungsgröße sowohl für die schon gespeicherten Merkmalsvektoren als auch für die benutzerdefinierten Merkmalsvektoren wird es möglich, die Ergebnisse der sprecherabhängigen und der sprecherunabhängigen Verfahren miteinander zu vergleichen.

Eine weitere positive Eigenschaft des erfindungsgemäßen Verfahrens ist darin zu sehen, daß die Wortschätze zur sprecherunabhängigen Spracherkennung mit den neu von dem Benutzer eingesprochenen Worten gemischt werden können.

Ein Ausführungsbeispiel der Erfindung ist in den Figuren dargestellt und wird im weiteren näher erläutert.

Es zeigen

Fig. 1        in Form einer Skizze eine Anordnung, mit der die Aufnahme von Sprachsignalen eines Benutzers durch einen Rechner dargestellt ist;

Fig. 2a und 2b    ein Sprachsignal im Zeitbereich mit den einzelnen Sprachsignalteilen (Fig. 2a) sowie mit sich überlappenden Sprachsignalteilen (Fig. 2b);

Fig. 3        in Form eines Blockdiagramms die erfindungsgemäße Rechnereinheit zur Spracherkennung;

Fig. 4        in Form eines Ablaufdiagramms das erfindungsgemäße Verfahren in seinen einzelnen Verfahrensschritten;

Fig. 5        in Form eines Blockdiagramms mehrere Alternativen zur Bildung der Ähnlichkeitswerte bei dem Vergleich der Benutzer-Merkmalsvektoren mit abgespeicherten Phonem-Merkmalsvektoren;

Fig. 6        eine Skizze, in der in Form einer Tabelle ein einfaches Beispiel zur Bestimmung einer Folge von Phonemen anhand von Ähnlickeitswerten dargestellt ist.

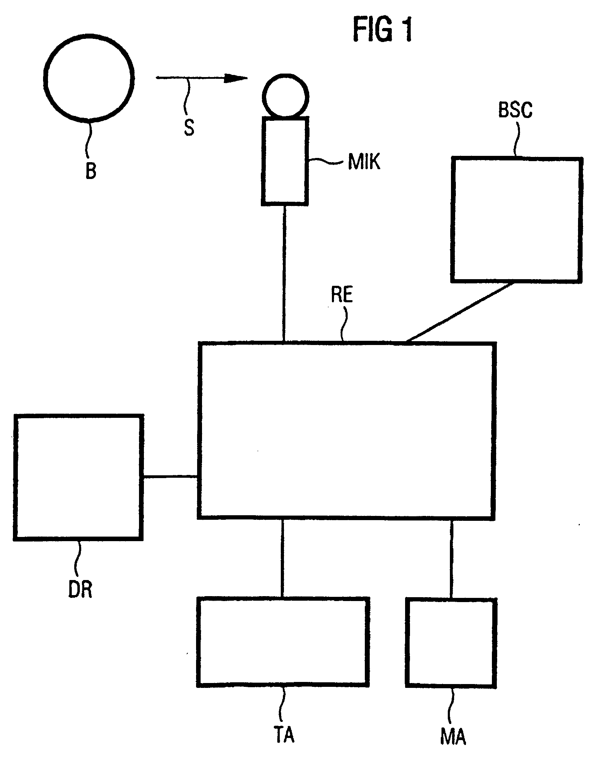

In Fig. 1 ist ein Benutzer B dargestellt, der ein Sprachsignal S in ein Mikrofon MIK einspricht. Das Mikrofon MIK ist mit einer Rechnereinheit RE zur Spracherkennung gekoppelt. In der Rechnereinheit RE wird das eingesprochene Sprachsignal S digitalisiert und gemäß dem erfindungsgemäßen Verfahren weiterverarbeitet. Weiterhin wird in der Rechnereinheit RE, deren Aufbau im weiteren erläutert wird, das Verfahren zur Spracherkennung durchgeführt.

Die Rechnereinheit RE ist ferner mit einem Bildschirm BSC und/oder mit einem Drucker DR und/oder mit einer anderen beliebigen Ausgabeeinheit gekoppelt, mit dem der Benutzer B die Ergebnisse des Verfahrens dargestellt bekommt. Ferner ist eine Tastatur TA und/oder eine Maus MA in dieser Anordnung zur Eingabe von Daten vorgesehen.

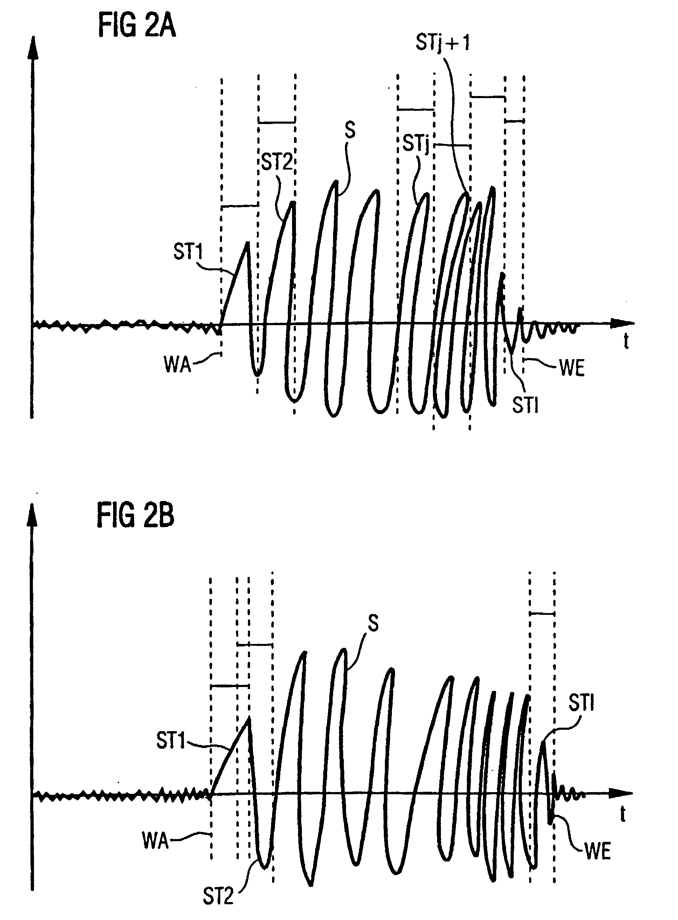

In den Fig. 2a und 2b ist jeweils das digitalisierte Sprachsignal S über einer Zeit t dargestellt. Zur Vereinfachung der weiteren Erläuterung, jedoch keinesfalls einschränkend zu verstehen, wird angenommen, daß das Sprachsignal S in Form eines Wortes mit einem Wortanfang WA und einem Wortende WE vorliegt. Das Sprachsignal S wird, wie in Fig. 2a dargestellt, in einzelne Sprachsignalteile STj unterteilt, wobei ein erster Index j jeweils den Sprachsignalteil STj eindeutig kennzeichnet und eine natürliche Zahl zwischen 1 und I ist, wobei mit I die Anzahl von Sprachsignalteilen STj angegeben wird.

Wie in Fig. 2b dargestellt, ist es in einer Weiterbildung des erfindungsgemäßen Verfahrens vorgesehen, daß sich die einzelnen Sprachsignalteile STj überlappen, wie im weiteren noch erläutert wird.

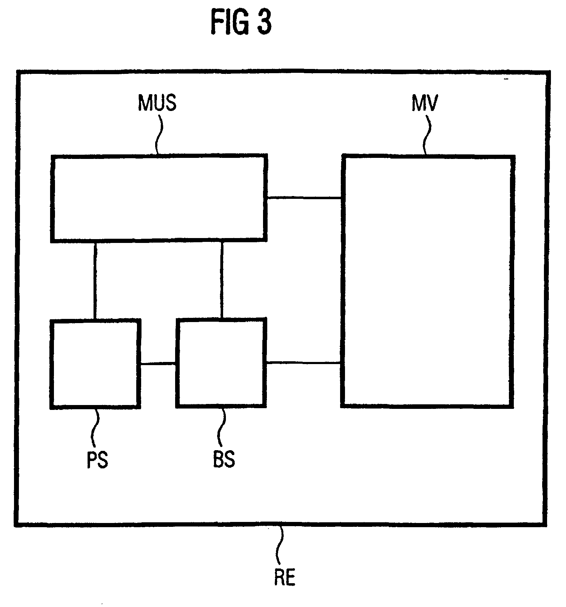

In Fig. 3 ist die erfindungsgemäße Rechnereinheit RE dargestellt.

Die Rechnereinheit RE weist mindestens folgende Komponenten auf:

-   Ein Mittel MUS zur sprecherunabhängigen Spracherkennung,
-   einen Phonemsatzspeicher PS,
-   einen Benutzerspeicher BS,
-   ein Mittel MV zum Vergleichen von Benutzer-Merkmalsvektoren eines Sprachsignalteils STj mit in dem Phonemsatzspeicher PS gespeicherten Phonem-Merkmalsvektoren.

Mit dem Mittel MUS zur sprecherunabhängigen Spracherkennung wird ein aus [1] bekanntes Verfahren zur sprecherunabhängigen Spracherkennung durchgeführt. Weitere Verfahren zur sprecherunabhängigen Spracherkennung sind dem Fachmann geläufig. Diese können ohne weiteres in dem Mittel MUS zur sprecherunabhängigen Spracherkennung implementiert werden.

In dem Phonemsatzspeicher PS sind fabrikatorisch festgelegte Einzelwörter in Form einer sogenannten Phonemdarstellung gespeichert. Ferner sind in dem Phonemsatzspeicher PS die einzelnen Phoneme der verwendeten Sprache mit den den Phonemen zugeordneten Phonem-Merkmalsvektoren gespeichert.

In dem Benutzerspeicher BS wird das von dem Benutzer B eingesprochene und schon mit dem erfindungsgemäßen Verfahren bearbeitete digitalisierte Sprachsignal S in Form von Einzelwörtern, die wiederum in einer Phonemdarstellung vorliegen, abgespeichert. Ferner können in den Benutzerspeicher BS auch Phonemfolgen zu den einzelnen von dem Benutzer eingesprochenen und schon "bearbeiteten" Sprachsignalen S gespeichert sein.

Die einzelnen Merkmalsvektoren, die Phonem-Merkmalsvektoren oder die Benutzer-Merkmalsvektoren, enthalten die für die Spracherkennung wichtigen Informationen des jeweiligen Sprachsignals S.

In dem Mittel MV zum Vergleichen von Benutzer-Merkmalsvektoren des jeweiligen Sprachsignalteils STj des digitalisierten Sprachsignals S mit den Phonem-Merkmalsvektoren und/oder mit Sprach-Merkmalsvektoren schon "bearbeiteter" und in dem Benutzerspeicher BS abgespeicherter digitaler Worte wird das erfindungsgemäße Verfahren, welches im weiteren beschrieben wird, durchgeführt (vgl. Fig. 3). Zusammengefasst ist eine Rechnereinheit zur Spracherkennung mit einem Mittel MUS zur sprecherunabhängigen Spracherkennung, mit einem Phonemsatzspeicher PS zur Speicherung von Phonem-Merkmalsvektoren von Phonemen und/oder Phonemen, die eine beliebige Anzahl von Segmenten aufweisen, wobei die Phonem-Merkmalsvektoren jeweils das Phonem charakterisieren, mit einem Benutzerspeicher BS zur Speicherung von Phonemfolgen digitalisierter Worte und/oder digitalisierter Worte, die von einem Benutzer in die Rechnereinheit eingesprochen werden, wobei die Phonemfolgen von einem Mittel MV zum Vergleichen von Benutzer-Merkmalsvektoren mit den gespeicherten Phonem-Merkmalsvektoren ermittelt werden, und mit dem Mittel MV zum Vergleichen von Benutzer-Merkmalsvektoren eines Teils digitalisierten Sprachsignals vorgesehen, die den Teil des digitalisierten Sprachsignals charakterisieren, mit den gespeicherten Phonem-Merkmalsvektoren.

Bei der Rechnereinheit sind mindestens zwei der folgenden Komponenten auf einem Chip realisiert:

- das Mittel MUS zur sprecherunabhängigen Spracherkennung,
- der Phonemsatzspeicher PS,
- der Benutzerspeicher BS,
- das Mittel MV zum Vergleichen von Benutzer-Merkmalsvektoren.

Durch die Abbildung von digitalisierten Sprachsignalen, die von einem Benutzer eingesprochen werden, auf schon gespeicherte Merkmalsvektoren von Phonemen ist es möglich, ausschließlich das Lösungsprinzip der sprecherunabhängigen Spracherkennung zu verwenden.

Ein Algorithmus zur sprecherabhängigen Spracherkennung ist bei dieser Rechnereinheit nicht mehr in einem ROM-Speicher gespeichert. Dadurch wird eine erhebliche Einsparung an benötigtem ROM-Speicherbedarf erzielt.

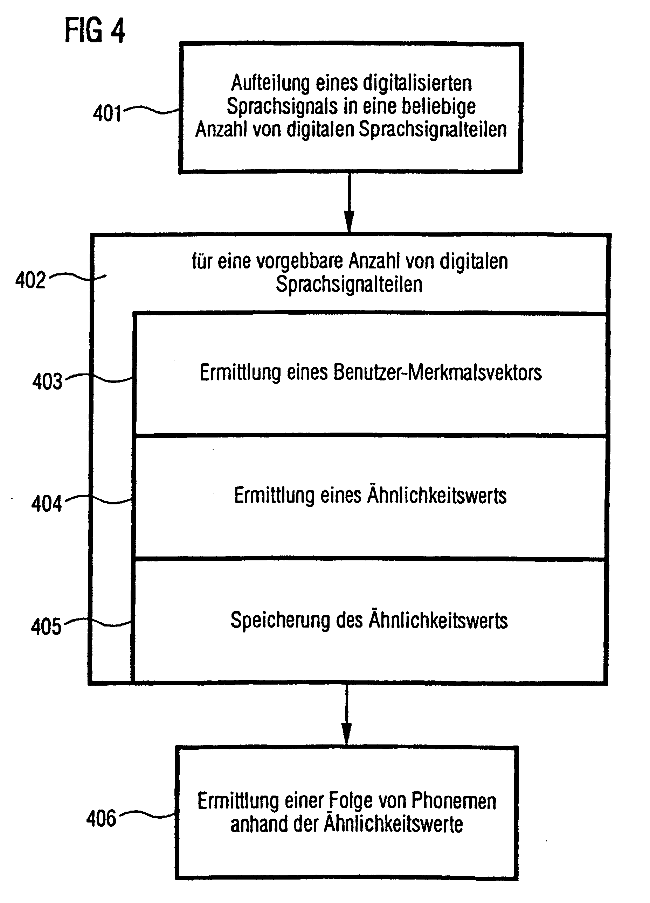

In Fig. 4 ist in Form eines Ablaufdiagramms das erfindungsgemäße Verfahren in seinen einzelnen Verfahrensschritten dargestellt.

In einem ersten Schritt 401 wird das von den Benutzer B eingesprochene Sprachsignal S, welches von der Rechnereinheit RE digitalisiert wurde, in eine beliebige Anzahl von Sprachsignalteilen STj aufgeteilt 401.

Für eine vorgebbare Anzahl von Sprachsignalteilen STj werden jeweils folgende Schritte zur Ermittlung eines Ähnlichkeitswerts für den jeweiligen Sprachsignalteil STj mit gespeicherten Phonem-Merkmalsvektoren durchgeführt 402.

Für jeden Sprachsignalteil STj der vorgebbaren Anzahl von Sprachsignalteilen STj wird ein Benutzer-Merkmalsvektor ermittelt, der die für die Spracherkennung relevanten Informationen aufweist 403.

Der Benutzer-Merkmalsvektor wird nun mit einer beliebigen Anzahl der gespeicherten Phonem-Merkmalsvektoren, die die einzelnen gespeicherten Phoneme charakterisieren, verglichen. Der Vergleich kann auf unterschiedlichste Weise durchgeführt werden, wobei ein einfaches Beispiel im weiteren näher erläutert wird. Durch den Vergleich wird jeweils für jedes Paar Benutzer-Merkmalsvektor und Phonem-Merkmalsvektor ein Ähnlichkeitswert AK ermittelt 404. Der Ähnlichkeitswert AK wird jeweils gespeichert 405.

Das Ergebnis dieser Vorgehensweise ist, daß für die vorgebbare Anzahl von Sprachsignalteilen STj nunmehr für die Benutzer-Merkmalsvektoren, die mit entsprechenden Phonem-Merkmalsvektoren verglichen wurden, jeweils ein Ähnlichkeitswert Ak verfügbar ist, der die Ähnlichkeit des Benutzer-Merkmalsvektors mit dem Phonem-Merkmalsvektor und somit die Ähnlichkeit des Sprachsignalteils STj mit den berücksichtigten Phonemen beschreibt.

Anhand der Ähnlichkeitswerte Ak wird in einem letzten Schritt 406 eine Folge von Phonemen für das digitale Sprachsignal S bestimmt. Mit dieser Folge von Phonemen wird das eingesprochene digitale Sprachsignal S beschrieben.

In dieser Phonemdarstellung wird das digitale Sprachsignal S nunmehr in dem Benutzerspeicher als ein neues Wort des Wortschatzes abgespeichert. In einer Weiterbildung des erfindungsgemäßen Verfahrens werden zusätzlich zur Phonemdarstellung des digitalen Sprachsignals S die zugehörigen Sprach-Merkmalsvektoren mit abgespeichert.

Die Aufteilung des digitalen Sprachsignals in Sprachsignalteile STj 401 kann beispielsweise entweder durch Unterteilung des Sprachsignals S in eine beliebige Anzahl von Sprachsignalteilen STj erfolgen, die sich gegenseitig nicht überlappen, oder es kann in einer Weiterbildung des erfindungsgemäßen Verfahrens vorgesehen sein, daß sich die einzelnen Sprachsignalteile STj gegenseitig überlappen. Durch die Überlappung der einzelnen Sprachsignalteile STj wird der zeitliche Verlauf des Sprachsignals S besser in die Erkennung einbezogen.

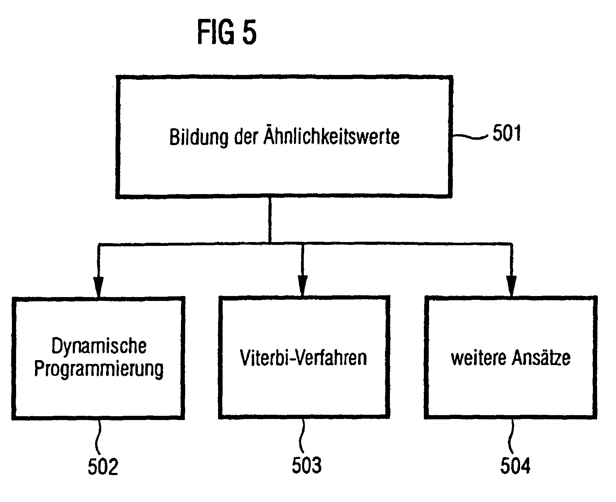

Der Ähnlichkeitswert Ak kann auf unterschiedliche Weisen ermittelt werden, wie in Fig. 5 dargestellt.

Der Ähnlichkeitswert Ak kann jeweils beispielsweise gebildet werden durch 501:

- den sogenannten Algorithmus der Dynamischen Programmierung 502 [1],

- durch den Viterbi-Algorithmus 503 [1],

- weitere Ansätze, die dem Fachmann geläufig sind 504.

Eine Abstandsgröße AG, aus der der Ähnlichkeitswert Ak gebildet wird, kann beispielsweise ermittelt werden nach einer der beiden folgenden Vorschriften:

$$- \; AG = \sum_{i=1}^{n} (a_i - b_i)^m \, ,$$

wobei mit

-- i ein erster Index zur eindeutigen Kennzeichnung der Komponenten der Merkmalsvektoren bezeichnet wird,
-- n eine Anzahl der Komponenten der Merkmalsvektoren bezeichnet wird,
-- $a_i$ jeweils eine Komponente des Benutzer-Merkmalsvektors bezeichnet wird,
-- $b_i$ jeweils eine Komponente des Phonem-Merkmalsvektors und/oder des Sprach-Merkmalsvektors bezeichnet wird.

$$- \; AG = \sum_{i=1}^{n} |a_i - b_i|^m \, ,$$

wobei mit

-- i ein erster Index zur eindeutigen Kennzeichnung der Komponenten der Merkmalsvektoren bezeichnet wird,
-- n eine Anzahl der Komponenten der Merkmalsvektoren bezeichnet wird,
-- $a_i$ jeweils eine Komponente des Benutzer-Merkmalsvektors bezeichnet wird,
-- $b_i$ jeweils eine Komponente des Phonem-Merkmalsvektors und/oder des Sprach-Merkmalsvektors bezeichnet wird.

Weitere Verfahren zur Bildung der Abstandsgröße AG sind dem Fachmann geläufig und können ohne Einschränkung in dem erfindungsgemäßen Verfahren verwendet werden.

Die Bildung des Ähnlichkeitswerts Ak erfolgt in einer dem Fachmann geläufigen Weise. Durch den Ähnlichkeitswert Ak wird eine für das Phonem entsprechende Emissionswahrscheinlihckeit angegeben, Die Bildung des Ähnlichkeitswerts Ak dient lediglich dazu, ein Maß für den Abstand des Benutzer-Merkmalsvektors zu dem Phonem-Merkmalsvektor oder zu dem Sprach-Merkmalsvektor in dem Merkmalsraum anzgeben.

Ein lediglich der einfachen Erläuterung dienendes, sehr einfaches Beispiel zur Bildung der Folge von Phonemen für das digitale Sprachsignal S anhand der Ähnlichkeitswerte Ak wird nun im weiteren beschrieben. Diese einfache Vorgehensweise sollte jedoch in keinster Weise als einschränkend verstanden werden.

Varianten bzw. Verfahren, die prinzipiell dasselbe Ziel erreichen, nämlich eine Folge von Phonemen anhand der Ähnlichkeitswerte Ak zu ermitteln, durch die das digitale Sprachsignal S möglichst korrekt angenähert wird, sind in diesem Verfahren in einer für den Fachmann bekannten Weise einsetzbar.

Ferner ist zu betonen, daß der Phonem-Merkmalsvektor sich nicht direkt auf ein ganzes Phonem beziehen muß, sondern es ist auch vorgesehen, daß das Phonem in eine beliebige Anzahl von Segmenten aufgeteilt wird, beispielsweise in ein Anfangssegment, in ein sogenanntes "Steady-State-Segment" sowie ein Endesegment des jeweiligen Phonems. Prinzipiell ist jedoch die Anzahl von Segmenten des jeweiligen Phonems und somit auch die Anzahl der Phonem-Merkmalsvektoren für das entsprechende Phonem beliebig und lediglich abhängig von einerseits der zur Verfügung stehenden Rechnerleistung und andererseits der gewünschten Genauigkeit der Spracherkennung. Auch ist es in einer Weiterbildung des Verfahrens vorgesehen, für jedes Phonem oder Phonemsegment mehrere Phonem-Merkmalsvektoren zu speichern und zu verarbeiten. Dadurch wird eine Modellierung verschiedener Aussprachevarianten eines Wortes möglich.

Bei der weiteren Erläuterung wird jedoch zur Vereinfachung von jeweils Phonem-Merkmalsvektoren, die ein Phonem als Ganzes charakterisieren, in einer ersten Variante ausgegangen.

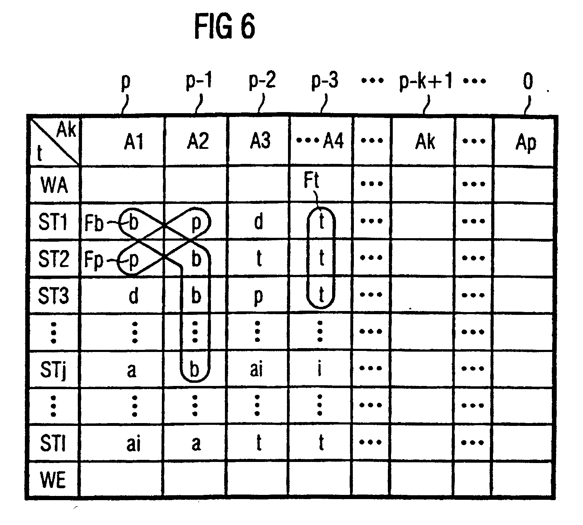

In der Figur 6 sind in Form einer Tabelle in einzelnen Zeilen der Tabelle die Sprachsignalteile STj, ausgehend von dem Wortanfang WA des Sprachsignals S bis zu dem Wortende WE des Sprachsignals S dargestellt. In den einzelnen Spalten der Tabelle sind für den jeweiligen Sprachsignalteil STj verschiedene ermittelte Ähnlichkeitswerte Ak dargestellt, wobei ein Ähnlichkeitsindex k eine beliebige Zahl zwischen 1 und p darstellt und jeden Ähnlichkeitswert Ak eindeutig kennzeichnet. Die einzelnen Ähnlichkeitswerte Ak beschreiben also jeweils die Ähnlichkeit des Sprachsignalteils STj mit dem jeweils verglichenen Phonem-Merkmalsvektor.

Zur Verdeutlichung des Verfahrens wird in dieser Tabelle in der jeweiligen Spalte für den Ähnlichkeitswert Ak direkt das Phonem dargestellt, mit dem der jeweilige Sprachsignalteil STj verglichen wurde. Zur weiteren Veranschaulichung sei in diesem Falle angenommen, daß die Reihenfolge der dargestellten Phoneme für jeden Sprachsignalteil STj nach abfallenden Ähnlichkeitswerten Ak geordnet ist. Es steht jeweils in der linken Spalte der Tabelle das Phonem, dessen Phonem-Merkmalsvektor mit dem jeweiligen Sprachsignalteil STj am besten übereinstimmte bezüglich der verwendeten Vorschrift zur Bildung des Ähnlichkeitswerts Ak.

Den einzelnen "erkannten" Phonemen wird nun entsprechend ihrer "Trefferwahrscheinlichkeit", die der Reihenfolge der Ähnlichkeitswerte Ak von links nach rechts in der Tabelle entspricht, eine beliebige Gewichtung zugeordnet. Diese kann beispielsweise darin bestehen, daß dem jeweils "ähnlichsten" Phonem mit einem ersten Ähnlichkeitswert A1 ein sehr hoher Gewichtswert, beispielsweise eine natürliche Zahl p, die der Anzahl berücksichtigter Ähnlichkeitswerte Ak entspricht, zugeordnet wird. Entsprechend wird einem zweiten Ähnlichkeitswert A2 beispielsweise das Gewicht p-1 zugeordnet. Dieses Prinzip wird weitergeführt bis zu dem p-ten Ähnlichkeitswert Ap, dem der Wert 0 zugeordnet wird. Beispielsweise wird in dieser Tabelle in einem ersten Sprachsignalteil ST1 dem mit dem ersten Ähnlichkeitswert A1 erkannten Phonem b das Gewicht p zugeordnet.

Nun werden in dieser Tabelle zusammenhängende Folgen gleicher Phoneme Fb, Fp, Ft ermittelt. Diese sind beispielsweise, ausgehend von dem ersten Sprachsignalteil ST1 bis zum j-ten Sprachsignalteil STj für das Phonem b zu finden. Diese Folge wird mit Fb bezeichnet. Eine weitere Folge gleicher Phoneme Ft wird beispielsweise für das Phonem t ermittelt. Weitere Folgen ergeben sich in diesem einfachen Fall beispielsweise für das Phonem p in einer mit Fp bezeichneten weiteren Folge gleicher Phoneme.

Für die einzelnen Folgen wird nun jeweils eine Bewertungsgröße der Folge ermittelt, beispielsweise durch Summenbildung der einzelnen Gewichte der Phoneme in den einzelnen Sprachsignalteilen STj. Für die Folge Fb des Phonems b ergibt sich in diesem Fall beispielsweise:

$$Fb = p + p\text{-}1 + p\text{-}1 + p\text{-}1 = 4p\text{-}3.$$

Für die Folge Ft für das Phonem t ergibt sich in diesem Fall dann:

$$Ft = 3p\text{-}8.$$

Die Zusammensetzung der Folge von Phonemen anhand der Ähnlichkeitswerte Ak erfolgt beispielsweise dadurch, daß jeweils die maximalen Bewertungsgrößen ermittelt werden und daraus unter Berücksichtigung der entsprechenden Sprachsignalteile STj die einzelnen ermittelten Phoneme mit einem geeigneten Auswahlverfahren aneinandergereiht werden. Diese Aneinanderreihung ergibt das entsprechende Sprachsignal S in Phonemdarstellung.

Zur Verfeinerung dieser Vorgehensweise ist in einer Weiterbildung des Verfahrens vorgesehen, die Länge der jeweiligen Folge der Phoneme bei der Gesamtermittlung der Folge von Phonemen für das digitale Sprachsignal S zu berücksichtigen. Ein Vorteil der Berücksichtigung der Länge der jeweiligen Folge der einzelnen Phoneme ist darin zu sehen, daß eine zu kurze Folge eine Klassifikation von Zufallstreffern möglich macht, die in keinster Weise gewollt ist. Eine zu lange Folgejedoch kann beispielsweise dazu führen, daß manche Klassen von Konsonanten nicht mehr zuverlässig detektiert werden..

Diese beiden Extremfälle sollten idealerweise zu einem "Kompromiß" zusammengeführt werden. Dieser Kompromiß kann beispielsweise darin bestehen, daß die Summe der einzelnen Gewichte normiert wird auf die Länge der jeweiligen Folge eines Phonems, was somit eine Gewichtung pro Sprachsignalteil STj ergibt.

Für die Folge Fb für das Phonem b ergibt sich dann bei einer Länge der Folge Fb von 4: 4p-3/4.

Als Bewertungsgröße wird demnach in diesem Beispielfall die Gewichtung pro Sprachsignalteil STj verwendet. Für den Fall, daß die Phonem-Merkmalsvektoren nicht ein ganzes Phonem, sondern nur einzelne Segmente eines Phonems beschreiben und dementsprechend die Sprachsignalteile STj auch jeweils mit ihren Benutzer-Merkmalsvektoren nur mit Phonem-Merkmalsvektoren, die einen Teil eines Phonems charakterisieren, verglichen werden, ist das prinzipielle Vorgehen gleich.

Ferner sind in Varianten des erfindungsgemäßen Verfahrens unterschiedliche Möglichkeiten vorgesehen, den Zeitraum zwischen dem Wortanfang WA und dem Wortende WE mit Phonemen oder Phonemsegmenten zu belegen. Der Wortanfang WA kann beispielsweise durch ein Mittel zur Wortdetektierung bestimmt werden. Ferner ist es vorgesehen, in einer Variante des Verfahrens denjenigen Sprachsignalteil STj als Wortanfang WA zu verwenden, dessen Gewichtung pro Fenster oder auch dessen Gewichtung maximal ist.

Weiterhin ist in einer Weiterbildung des Verfahrens zur Ermittlung der Phonemfolge vorgesehen, diese auch über eine vorgebbare Anzahl eventuell vorhandener Lücken in den Sprachsignalteilen STj zu bilden. Durch diese Weiterbildung weist das Verfahren eine erhöhte Robustheit und somit eine geringere Fehleranfälligkeit auf.

In diesem Dokument wurden folgende Veröffentlichungen zitiert:

[1] G. Ruske, Automatische Spracherkennung, Oldenbourg Verlag, 2. Auflage, ISBN 3-48622794-7, S. 172 - 195, 1992

[2] K. Zünkler, Spracherkennung mit Hidden-Markov Modellen unter Nutzung von unterscheidungsrelevanten Merkmalen, Dissertation Technische Universität München, S. 22 - 25, 1991

[3] Product Overview - Advance Information, DVC Advanced Voice Command Processor, DSP Communications, Inc., Cupertino, CA, USA, 1995

**Patentansprüche**

1.    Verfahren zur rechnergestützten Abbildung eines von einem Benutzer neu gesprochenen Wortes in Form eines digitalisierten Sprachsignals (S) auf schon gespeicherte und sprecherunabhängige Phoneme, die eine beliebige Anzahl von Segmenten aufweisen, und denen jeweils ein Phonem-Merkmalsvektor zugeordnet ist, der das jeweilige Phonem oder Phonemsegment charakterisiert,

- bei dem das digitalisierte Sprachsignals (S) in eine beliebige Anzahl von digitalen Sprachsignalteilen (STj, j=1 ..1) aufgeteilt wird (401),
- bei dem für eine vorgebbare Anzahl der Sprachsignalteile (STj) für jeden Sprachsignalteil (STj) folgende Schritte durchgeführt werden (402):

  -- für den Sprachsignalteil (STj) wird ein Benutzer-Merkmalsvektor ermittelt, der den Sprachsignalteil (STj) charakterisiert (403),
  -- aus einem Vergleich des Benutzer-Merkmalsvektors mit mindestens einer beliebigen Anzahl der Phonem-Merkmalsvektoren wird jeweils ein Ähnlichkeitswert (Ak) des Benutzer-Merkmalsvektors mit dem jeweiligen Phonem-Merkmalsvektor ermittelt (404),
  -- die Ähnlichkeitswerte (Ak) werden gespeichert (405), und

- anhand der Ähnlichkeitswerte (Ak) wird eine Folge von Phonemen für das digitalisierte Sprachsignal ermittelt, durch die das digitalisierte Sprachsignal beschrieben wird (406), und als neues Wort des Wortschatzes abgespeichert.

**2.** Verfahren nach Anspruch 1,
bei dem der Vergleich zusätzlich mit gespeicherten Sprach-Merkmalsvektoren digitalisierter Worte, die von einem Benutzer (B) vorgegeben werden, wobei die Sprach-Merkmalsvektoren jeweils einen Teil des digitalisierten Wortes charakterisieren, durchgeführt wird.

**3.** Verfahren nach Anspruch 1 oder 2,
bei dem der Ähnlichkeitswert (Ak) jeweils gebildet wird unter Verwendung des Verfahrens der Dynamischen Programmierung (502).

**4.** Verfahren nach Anspruch 1 oder 2,
bei dem der Ähnlichkeitswert (Ak) jeweils gebildet wird unter Verwendung des Viterbi-Verfahrens (503).

**5.** Verfahren nach einem der Ansprüche 1 bis 4,
bei dem bei der Ermittlung der Folge von Phonemen (Fb, Ft, Fp) für das digitalisierte Sprachsignal (S) folgende Schritte vorgesehen sind:

- es werden pro digitalem Sprachsignalteil (STj) mindestens zwei Ähnlichkeitswerte (Ak) gespeichert,
- es wird für mindestens zwei Sprachsignalteile (STj) eine Folge von Ähnlichkeitswerten (Ak), die sich auf das gleiche Phonem beziehen, eine Bewertungsgröße ermittelt,
- es werden die Phoneme aus den Sprachsignalteilen (STj), ausgewählt, deren Bewertungsgröße einen maximalen Wert aufweist.

**6.** Verfahren nach Anspruch 5,
bei dem bei der Ermittlung der Bewertungsgrößen die jeweilige Länge einer zusammenhängenden Folge (Fb, Ft, Fp) jeweils eines Phonems in der Folge von Ähnlichkeitswerten (Ak) berücksichtigt wird.

**7.** Verfahren nach Anspruch 6,
bei dem nur Folgen von Ähnlichkeitswerten (Ak) eines Phonems berücksichtigt werden, deren Länge größer ist als eine vorgebbare Schranke.

**8.** Verfahren nach einem der Ansprüche 1 bis 7,
bei dem für das digitalisierte Sprachsignal (S) ein Wortanfang (WA) und/oder ein Wortende (WE) detektiert wird.

**9.** Verfahren nach einem der Ansprüche 6 bis 8,
bei dem als ein erstes Sprachsignalteil (STj), durch das ein Wortanfang (WA) beschrieben wird, das Sprachsignalteil (STj) mit maximalem Ähnlichkeitswert (Ak) verwendet wird.

**10.** Verfahren nach einem der Ansprüche 1 bis 9,
bei dem sich die digitalen Sprachsignalteile (STj) überlappen.

**11.** Rechnereinheit zur Spracherkennung,
die eingerichtet ist, ein Verfahren nach einem der Ansprüche 1 bis 10 auszuführen.

**Claims**

**1.** Method for computer-aided mapping of a word, which is spoken for the first time by a user, in the form of a digitized speech signal (S) onto phonemes which have already been stored and are speaker-independent, have any desired number of segments and each of which has an associated phoneme feature vector which characterizes the respective phoneme or phoneme segment,

- in which the digitized speech signal (S) is subdivided into any desired number of digital speech signal parts (STj, j = 1..1) (401),
- in which the following steps are carried out (402) for a number, which can be predetermined, of speech signal parts (STj) for each speech signal part (STj):

-- a user feature vector, which characterizes the speech signal part (STj), is determined (403) for the speech signal part (STj),
-- a similarity value (Ak) between the user feature vector and the respective phoneme feature vector is in each case determined (404) from the comparison of the user feature vector with at least any desired number of phoneme feature vectors,
-- the similarity values (Ak) are stored (405), and

- a sequence of phonemes for the digitized speech signal is determined on the basis of the similarity values (Ak), and is used to describe (406) the digitized voice signal, and is stored as a new word in the word vocabulary.

2. Method according to Claim 1,
in which the comparison is additionally carried out with stored speech feature vectors of digitized words which are predetermined by a user (B), with the speech feature vectors each characterizing a part of the digitized word.

3. Method according to Claim 1 or 2,
in which the similarity value (Ak) is in each case formed using the dynamic programming method (502).

4. Method according to Claim 1 or 2,
in which the similarity value (Ak) is in each case formed using the Viterbi method (503).

5. Method according to one of Claims 1 to 4,
in which the following steps are provided for determining the sequence of phonemes (Fb, Ft, Fp) for the digitized speech signal (S):

- at least two similarity values (Ak) are stored per digital speech signal part (STj),
- a sequence of similarity values (Ak), which relate to the same phoneme, a weighting factor, is determined for at least two speech signal parts (STj), and
- those phonemes whose weighting factor has a maximum value are selected from the speech signal parts (STj).

6. Method according to Claim 5,
in which the respective length of a cohesive sequence (Fb, Ft, Fp) of in each case one phoneme is taken into account in the sequence of similarity values (Ak) when determining the weighting factors.

7. Method according to Claim 6,
in which only sequences of similarity values (Ak) of a phoneme whose length is greater than a limit which can be predetermined are taken into account.

8. Method according to one of Claims 1 to 7,
in which a word start (WA) and/or a word end (WE) are/is detected for a digitized speech signal (S).

9. Method according to one of Claims 6 to 8,
in which the speech signal part with the maximum similarity value (Ak) is used as a first speech signal part (STj), by means of which a word start (WA) is described.

10. Method according to one of Claims 1 to 9,
in which the digital speech signal parts (STj) overlap.

11. Computer unit for speech recognition,
which is set up to carry out a method according to one of Claims 1 to 10.

**Revendications**

1. Procédé pour la représentation assistée par ordinateur d'un nouveau mot qui vient d'être prononcé par un utilisateur, sous forme d'un signal vocal numérisé (S) sur des phonèmes préalablement mémorisés et non subordonnés à la personne qui parle, lesquels présentent un nombre quelconque de segments et auxquels est respectivement affecté un vecteur de caractéristiques d'un phonème, qui caractérise le phonème ou le segment de phonème concerné,

- dans lequel le signal vocal numérisé (S) est divisé en un nombre quelconque de fractions numériques d'un signal vocal (STj, j=l ..1) (401),
- dans lequel, les étapes suivantes sont réalisées, pour chaque fraction d'un signal vocal (STj), pour une quantité prédéfinissable de fraction d'un signal vocal (STj) (402):

-- un vecteur de caractéristiques utilisateur, qui caractérise la fraction d'un signal vocal (STj) est déterminé pour la fraction d'un signal vocal (STj) (403),
-- une valeur de similitude (Ak) du vecteur de caractéristiques utilisateur est déterminée avec le vecteur de caractéristiques d'un phonème respectif, par comparaison du vecteur de caractéristiques utilisateur avec au moins une quantité quelconquee de vecteurs de caractéristiques d'un phonème (404)
-- les valeurs de similitude (Ak) sont mémorisées (405) et

- à l'aide des valeurs de similitude (Ak), une suite de phonèmes décrivant le signal vocal numérisé (406) est déterminée pour le signal vocal numérisé, et mémorisée en tant que nouveau mot du vocabulaire.

2. Procédé selon la revendication 1,
dans lequel la comparaison est par ailleurs réalisée avec des vecteurs des caractéristiques vocales mémorisées pour les mots numérisés, qui sont prédéfinis par un utilisateur (B), les vecteurs de caractéristiques vocales caractérisant respectivement une fraction du mot numérisé.

3. Procédé selon la revendication 1 ou 2,
dans lequel la valeur de similitude (Ak) est respectivement formée, par application du procédé de programmation dynamique (502).

4. Procédé selon la revendication 1 ou 2,
dans lequel la valeur de similitude (Ak) est respectivement formée, par application du procédé de Viterbi (503).

5. Procédé selon la ne quelconque des revendication 1 à 4,
dans lequel les étapes suivantes sont prévues, pour la définition de la suite de phonèmes (Fb, Ft, Fp) pour le signal vocal numérisé (S):

- deux valeurs de similitude (Ak) au moins sont mémorisées pour chaque fraction numérique d'un signal vocal (STj),
- une valeur d'évaluation est déterminée pour au moins deux fractions d'un signal vocal (STj) par définition d'une série de valeurs de similitude (Ak), qui se réfèrent à un même phonème.
- les phonèmes des fractions d'un signal vocal (STj) dont la valeur d'évaluation correspond à un chiffre maximal sont sélectionnés.

6. Procédé selon la revendication 5,
dans lequel la longueur respective d'une suite cohérente (Fb, Ft, Fp) d'un phonème respectif dans la suite des valeurs de similitude (Ak) est prise en compte pour la détermination des valeurs d'évaluation.

7. Procédé selon la revendication 6,
dans lequel seules des suites de valeurs de similitude (Ak) d'un phonème, dont la longueur est supérieure une limite prescriptible, sont prises en compte.

8. Procédé selon l'une quelconque des revendications 1 à 7,

dans lequel un début de mot (WA) et/ou une fin de mot (WE) est détecté pour le signal vocal numérisé.

9. Procédé selon l'une quelconque des revendications 6 à 8,
dans lequel la fraction d'un signal vocal (STj) présentant la valeur de similitude (Ak) maximale est utilisée en tant que première fraction d'un signal vocal (STj) décrivant le début d'un mot (WA).

10. Procédé selon l'une quelconque des revendications 1 à 9,
dans lequel les fractions numériques d'un signal vocal (STj) se chevauchent.

11. Unité centrale pour la reconnaissance de la parole, qui est conçue pour la réalisation d'un procédé selon l'une quelconque des revendications 1 à 10.

# FIG 1

## FIG 2A

## FIG 2B

# FIG 3

## FIG 4

401 — Aufteilung eines digitalisierten Sprachsignals in eine beliebige Anzahl von digitalen Sprachsignalteilen

402 — für eine vorgebbare Anzahl von digitalen Sprachsignalteilen

403 — Ermittlung eines Benutzer-Merkmalsvektors

404 — Ermittlung eines Ähnlichkeitswerts

405 — Speicherung des Ähnlichkeitswerts

406 — Ermittlung einer Folge von Phonemen anhand der Ähnlichkeitswerte

# FIG 5

Bildung der Ähnlichkeitswerte — 501

Dynamische Programmierung — 502

Viterbi-Verfahren — 503

weitere Ansätze — 504

# FIG 6

| Ak / t | A1 | A2 | A3 | ⋯A4 | ⋯ | Ak | ⋯ | Ap |
|---|---|---|---|---|---|---|---|---|
| | p | p-1 | p-2 | p-3 | ⋯ | p-k+1 | ⋯ | 0 |
| WA | | | | Ft | ⋯ | | ⋯ | |
| ST1 | Fb—b | p | d | t | ⋯ | | ⋯ | |
| ST2 | Fp—p | b | t | t | ⋯ | | ⋯ | |
| ST3 | d | b | p | t | ⋯ | | ⋯ | |
| ⋮ | ⋮ | ⋮ | ⋮ | ⋮ | ⋯ | | ⋯ | |
| STj | a | b | ai | i | ⋯ | | ⋯ | |
| ⋮ | ⋮ | ⋮ | ⋮ | ⋮ | ⋯ | | ⋯ | |
| STl | ai | a | t | t | ⋯ | | ⋯ | |
| WE | | | | | | | | |